# EUROPEAN PATENT SPECIFICATION

(11) **EP 3 564 190 B1**
(45) Date of publication and mention of the grant of the patent: **11.05.2022**
(21) Application number: 19171859.2
(22) Date of filing: 30.04.2019
(51) Int. Cl.: C02F 1/20, C02F 1/78, C02F 101/12, C02F 103/06

(54) **A SYSTEM FOR OZONATION OF LIQUIDS AND A METHOD FOR OZONATION OF LIQUIDS**
SYSTEM ZUR OZONISIERUNG VON FLÜSSIGKEITEN UND VERFAHREN ZUR OZONISIERUNG VON FLÜSSIGKEITEN
SYSTÈME ET PROCÉDÉ D'OZONISATION DE LIQUIDES

(30) Priority: 30.04.2018 PL 42540518
(43) Date of publication of application: 06.11.2019
(73) Proprietor: Muszanski, Robert, 33-380 Krynica-Zdroj (PL)
(72) Inventor: Muszanski, Robert, 33-380 Krynica-Zdroj (PL)
(74) Representative: Kancelaria Eupatent.pl Sp. z.o.o

(56) References cited:
- EP-A2- 0 858 971
- WO-A1-02/06164
- US-A- 5 766 488
- US-B2- 7 279 093

## Description

### TECHNICAL FIELD

The object of the invention is a system for ozonation of liquids, in particular water or sewage, and a method for ozonation of liquids, in particular water or sewage. This system makes use of vertical contact tanks adapted to work with variable water flows, in order to reduce the formation of carcinogenic compounds, and aerators for ionised air which make use of recycled ozone from these columns for the processes of oxidation grading of liquids.

### BACKGROUND

Many methods for ozonation of liquids for various purposes are known in the art. The technical implementation of such a process takes place by means of specific equipment adapted to specific water quality parameters and to the performance required.

A PCT patent application WO9628392 discloses a water ozonisation process that takes place in a reaction chamber of cylindrical shape. An ozone-containing gas is blown into the water and the water flows through the reactor. In order to ensure an optimal level of absorption, the reaction chamber is equipped with a mixing device that generates a turbulent flow. This solution is easy to build, but it does not provide controlled degassing of fluid after ozonation and ensures low accuracy of process parameters - mainly due to time and turbulent disturbance caused by the mixer.

A European patent application EP299289A1 discloses a process of continuous ozonation of unsaturated organic compounds in a reaction column in which unsaturated compounds are dissolved in a protic solvent, and a carrier gas containing ozone and an inert cooling agent are passed from top to bottom. The ozonation zone is essentially in the vertical reaction column, and the mixture is passed concurrently and downward. The solution also provides for the use of various substances as protic solvents. This solution results in the introduction, to the water, of substances such as a protic solvent or a cooling agent, which may limit the use of so processed water for some applications.

A Chinese patent application CN1190646A discloses an ozone reactor for the treatment of drinking water. Ozone is stored in an ozone compressor and is injected into the reactor in the compressed state, and is immediately compressed in an aqueous pressure device, which promotes the stimulation of oxidation. In this solution, there is a need to maintain pressure parameters of the process, which is not technologically convenient and generates costs.

A Swedish patent application SE7804787A discloses a solution for ozone-bleaching a finely divided voluminous material or pulp with a solids content in the range of 35% to 50%, which is transferred to an ozoniser of a high consistency and a ripening reactor which are combined with each other, where the essentially vertical column of pulp is a means for blocking the gas flow.

A German patent application DE19910639A1 discloses a solution for ozonation of fluids, e.g. water, which has an ozone-generating electrolytic cell and a submersible pump, and a vacuum injector for ozone recycling. The reactor contains a vertical reaction tank with a fluid inlet in the lower part and a fluid outlet in the upper part, as well as a gas outlet. The set has the form of an integrated unit intended for processing the fluid both in a continuous and circular manner. This solution requires the use of many mechanical devices, which undoubtedly increases the cost of the entire installation, and the use of one tank does not allow degassing of already processed water.

A PCT application WO0206164A1 discloses a process for treating water to reduce pollutants using a fluidized bed supporting microorganisms, ozonated pollutants and a carbon source for the microorganisms

A US patent US5766488 discloses apparatus for treating water that includes a vertically extending contact vessel, wherein water is contacted with ozone, and a return vessel which contains a column of water of a sufficient height to drive water through downstream solids separation stages. Ozone is removed from the water and the rate of ozone injection is monitored and automatically adjusted so that no great amount of ozone remains in water entering the solids separation stages. The ozone is generated in elongated elements that are cooled by the process water and that are positioned to serve as a static mixer for such water.

A general disadvantage of the known solutions is that a change in the water flow rate through the reactor (column) results in a change in the time the water resides in the reactor. If that residence time changes, compounds that are detrimental to health may be formed. Therefore, there is a need to provide a method and a system for ozonation which will allow effective ozonation at varying water flows, as well as recycling of desorbing ozone and its use in pre-aeration processes instead of using pre-ozonation processes.

### SUMMARY OF THE INVENTION

In the present invention, multi-stage contact columns are used for the ozonation processes of liquids, such as underground water, surface water or sewage, for variable and constant liquid flow rates, which limit formation of byproducts of oxidation, disinfection and, in particular, carcinogenic compounds, and an aerator-desorber for ionised air which uses excess ozone combined with air for the processes of pre-oxidation of liquids, such as water or sewage.

The invention relates to a system and a method for ozonation of liquids as described in independent claims 1 and 6. Further preferred embodiments are described in dependent claim 2-5.

In the present invention, due to the use of multi-stage contact columns, a constant residence time of liquid in the reactor can be obtained for a wide range of intensities of flow rates. The volume of the liquid is controlled by means of horizontal main overflows in the column and by the filling height of the second column (tank), so that the residence time of the ozonated liquid in the columns is the same despite the different volume of liquid flowing into the column. For various liquid flows, appropriate multi-stage contact columns are built. For large flows, large volume columns can be provided which have large volumes and are high with several multi-stage overflows at different heights. Smaller columns with small volumes with fewer overflows are enough for small flow rates. The aerator-desorber using the active mixture of air and ozone from desorption, hereinafter referred to as ionised air, allows the liquid to be pre-oxidised in order to reduce the amount of ozone in the ozonation process in the contact columns.

### BRIEF DESCRIPTION OF DRAWINGS

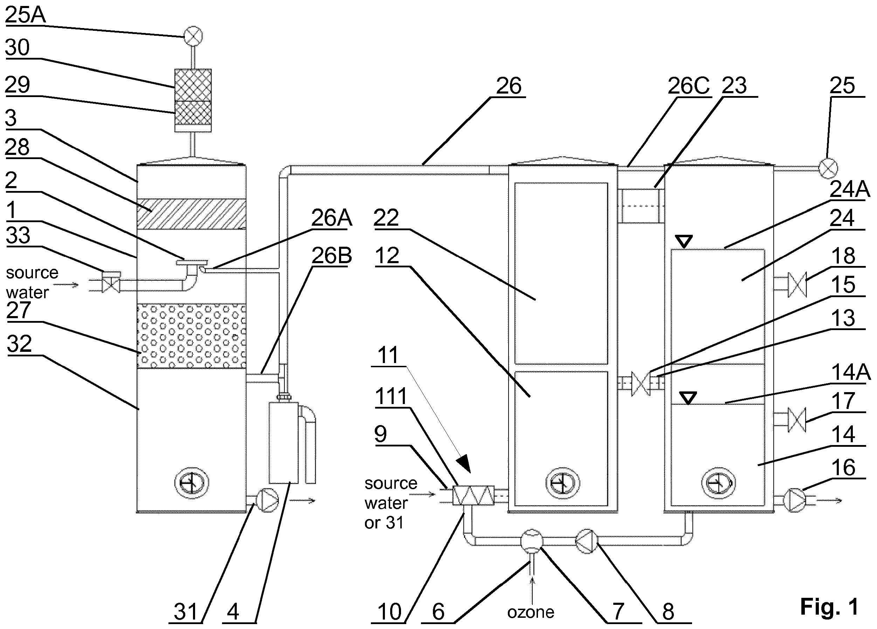

The object of the invention is presented by means of an example embodiment in the drawing wherein Fig. 1 shows a system for ozonation of liquids according to the invention.

### DETAILED DESCRIPTION

The present invention will be discussed with reference to an embodiment used for purification of water, but a similar solution can also be used for purifying other types of liquids, such as sewage.

The system for ozonation of liquids comprises a set of oxidising and upflowing columns 12, 22, comprising at least two columns 12, 22 arranged one on top of the other. At the bottom of the lower column 12, there is a system 11 for introducing and dispersing ozone, located outside the column 12. The system 11 for introducing and dispersing ozone comprises a mixing chamber 111 with a source water inlet from a pipeline 9 and a pre-ozonated water inlet from a pipeline 10. The set of oxidising and upflowing columns 12, 22 is connected to a set of degassing and holding columns 14, 24, comprising at least two columns 14, 24 arranged one on top of the other. The connection between the sets is provided by flow passages 13, 23 located in the upper parts of the columns, wherein one flow passage 13 is arranged in the central part of the sets of columns and the other flow passage 23 is located in the upper part of the sets of columns. In addition, a pipeline 26C is installed between the columns that allows air with ozone to flow between the upper columns 22, 24. Preferably, the elements are made of stainless steel type 304 (1.4301 - 0H18N9) or 316L (1.4404 - 00H17N14M2) as free-standing tanks with the option of external inspection.

Source water, i.e. water to be subjected to the ozonation process, is supplied to the mixing chamber 111 of the system 11 for introducing and dispersing ozone. The source water is supplied from the external pipeline 9, or after technological processes, or after an aerator-desorber 3 from a pump 31.

The process of water ozonation by means of the system described herein is carried out as follows: the source water to be subjected to ozonation is introduced from the pipeline 9 into the mixing chamber 111, to which water from the column 14, which is pre-ozonated water, is also supplied in parallel via the pipeline 10. The pipeline 10 for supplying the pre-ozonated water from the chamber 14 to the mixing chamber 111 is provided with a system 7 for dosing ozone from an ozone pipeline 6, as well as with a pump 8. The pump 8 ensures an appropriate flow of water from the column 14 to the mixing chamber 111, and the system 7 for dosing ozone from the ozone pipeline 6 allows ozone to be introduced into the pipeline 10. Preferably, the system 7 for dosing ozone may have a form of an injector that enables injection of ozone from the ozone pipeline 6 into the pipeline 10, and is connected to the pipeline 10 between the pump 8 and the mixing chamber 111. This design thus allows water to be mixed with ozone from the column 14 before it is introduced into the mixing chamber 111.

In the mixing chamber 111, source water from the pipeline 9 (i.e., previously not subjected to ozonation or subjected to aeration with ionised air) is thus mixed in the system 11 for introducing and dispersing ozone - in the mixing chamber 111 with the pre-ozonated water from the pipeline 10 after the column 14. In other words, the system 7 for dosing ozone, preferably in a form of an injector 7, allows ozone to be sucked from an ozone generator (ozone generator is not shown to keep the drawing clear) via the ozone pipeline 6, and such mixture of water and gas (pre-ozonated water - ozone) is introduced via the pre-ozonated water pipeline 10 into the mixing chamber 111, preferably of a static mixer design, where as a result of mixing source water from the pipeline 9 with pre-ozonated water from the pipeline 10, the entire volume of water in this chamber 111 is subjected to mixing with ozone. Therefore, due to its function, the system comprising the mixing chamber 111 is referred to as the system 11 for introducing and dispersing ozone.

From the mixing chamber 111, and therefore from the system 11 for introducing and dispersing ozone, water enriched with ozone - that is a mixture of water from the pipeline 9 and from the pipeline 10 - is directed to the column 12, and via the column 12 optionally also to the column 22. The columns 12 and 22 are a system of communicating vessels. In the columns 12, 22, the ozonation process is carried out, for example for a period of 4 to 12 minutes, during which oxidation-reduction reactions take place with the use of ozone contained in water. The duration of the process, i.e. the residence time of water in the column 12 and possibly in the column 22, is selected depending on whether oxidation or disinfection of water is required.

The segmented design of column sets, in which columns are placed one on top of the other, allows the system to be used at different flow rates. Obtaining appropriate time of flow, and therefore of ozonation at a different volume of water flow is possible due to the compact design of the columns and the possibility of adding further segments upwards. Thereby, the volume of water subjected to ozonation increases the height of the liquid column, and thus, in the set of oxidising and upflowing columns 12, 22 the water surface rises - in the required, assumed time, water flows into the highest, open overflow system: into the first flow passage 13 and/or the other flow passage 23, respectively, via which the water overflows from the set of oxidising and upflowing columns 12, 22 to the set of degassing and holding columns 14, 24.

The course of the water ozonation process in the column 12 begins after delivering the water from the system 11 for introducing and dispersing ozone, from the bottom of the oxidising and upflowing column 12 in such a way as to cause rotational movement of water around its axis. The design of the column 12 also allows sampling residual ozone in the oxidising and upflowing column 12 with the smallest amount of gas particles - ozone, which allows more accurate measurement because gas bubbles do not interfere with correct reading by all kinds of measurement probes.

As the water surface rises in the column 12, the ozonation process takes place - because ozone contained in the water reacts with various components thereof, whereupon water overflows via one flow passage 13, also called an overflow, to the adjacent degassing and holding column 14.

If there is a need to close the overflow system at a certain level, this can be done by means of adjustable gate valves 15, for example valves blocking the flow of water in the flow passage 13. With the gate valve 15 closed in one flow passage 13, the water then flows from the column 22 to the column 24 via the second flow passage 23 - which ensures a longer residence time of water in the set of oxidising and upflowing columns 12, 22 or with an increased stream of water makes it possible to obtain the same residence time of water in the column as at a smaller flow stream.

In the column 14 and possibly column 24, which are components of the set of degassing and holding columns 14, 24, water is degassed and the ozonation process is stopped. This is desirable due to the risk of formation of dangerous (carcinogenic) compounds in water with an inadequate content of ozone and the maintaining of so-called residual ozone after the process and constant contact thereof with water.

Removal of desorbing ozone and ozone from degassing in the set of degassing and holding columns 14, 24 consists in blowing air into this set of columns 14, 24, by means of a fan 25, which draws air from the environment. As a result of air and ozone contact, in the interior of the columns 14 and 24 above the water surface, a gas mixture is formed that flows further through the pipeline 26C to the second column 12 and 22, additionally collecting desorbed ozone from these columns and then is removed from the interior of the ozonation device via an outlet 26 to the aerator-desorber 3 or to an ozone destructor because this mixture is a by-product of the ozonation process of source water. The gas mixture is rich in ozone, hereinafter referred to as ionised air.

Preferably, the ionised air removed from the water ozonation system in the columns 12, 22, 14, 24 can be directed to the aerator-desorber 3 via the pipeline 26C, where the air is used to pre-aerate the water.

The aerator 3 for pre-aeration of water, cooperating with the water ozonation system according to the invention is a column divided horizontally into vertical sections.

The aerator 3 has an inlet section 1 in which there is a diffuser 2 which dissipates the water stream delivered to the diffuser via an automatic valve 33. Below the diffuser, there is an inlet of ionised air 26A, via which the dispersed water stream from the diffuser is aerated. As a result, there is a large contact surface of source water and ionised air - as shown schematically in the drawing.

Below the inlet section 1, the aerator 3 has a trickle bed 27 in which water is nebulised into fine droplets through which ionised air from the pipeline 26B flows, which is the second stage of oxidation. Water from the inlet section flows gravitationally into a trickle chamber 32 of the aerator 3, located directly below the trickle bed 27.

The air removed from the water ozonation system is thus introduced into the inlet section 1 via the inlet 26A, thus ensuring adequate diffusion of the water stream, and in parallel, to the trickle chamber 32 of the aerator 3 via the inlet 26B. Such a design of the aerator provides a two-stage contact of water to be aerated and air - in the inlet section by means of an air stream from the inlet 26A and after passing through the trickle bed 27 from the inlet 26B - in the trickle chamber 32. After aeration-oxygenation, the water is removed from the trickle chamber, via the outlet with the pump 31 to subsequent technological processes or directly to the contact columns of the system 11 for introducing and dispersing ozone.

Therefore, the aerator 3 allows an efficient use of post-process air, from the ozonation of water (so-called recycled ozone), in aeration - oxidation of source water. Excess air after the process of water aeration in the aerator 3, before being released into the atmosphere, is passed through a gas purification system containing a separation bed 28, installed directly above the inlet section of the aerator 3, a scrubber 29 installed above the separation bed 28, and an ozone destructor 30 - installed above the scrubber 29, in which ozone contained in the air is destroyed into molecular oxygen.

In order to increase the gas transmission through the components of the aerator 3: the trickle bed 27, the separation bed 28, the scrubber 29 and the ozone destructor 30, the aerator also comprises an exhaust fan 25A, via which the cleaned post-process air is released outside - into the atmosphere. The aerator 3 can also be provided with a safety outlet 4 ensuring the discharge of excess water from the trickle chamber 32 outside the device. With the simultaneous use of the aerator 3 and the contact columns 12, 22, 14, 24 in the combined system, the safety outlet 4 is used for all devices.

In the ozonation system, in the set of degassing and holding columns 14, 24 after degassing consisting in removal of the ozone from the chamber 14 by means of an overpressure of the blown air, and thus in purging of the interior of this column set, above the water surface: 14A or 24A - as described above, a process of holding water takes place. Stepless control of the process of holding the degassed water is realised by determining the height of the water surface. The height of the liquid surface in the water holding process can therefore be equal to the water surface line indicated by 14A, and hence at the height of the column 14, or it can be equal to the water surface line indicated by 24A. Obtaining the surface 14A or 24A - and thus a correspondingly high liquid surface in the overflow set of degassing and holding columns 14 and 24 is implemented by a system for maintaining a proper filling level of the columns 14 and 24 - comprising a pump 16, by means of which the water, after the end of the holding process, is removed from the set of degassing and holding columns 14, 24. In addition, to remove water from columns 14 and/or 24 respectively, after the end of the holding process, gate valves 17 and 18 can be also used, which are drain valves, allowing gravitational discharge of water from the system after the end of ozonation process. The gate valves 17 and 18 are mounted in the set of degassing and holding columns 14, 24 at different heights, depending on the number of vertical columns used. For example, as shown in the drawing, for embodiment of the system in which the set of degassing and holding columns comprises two overflow columns 14 and 24, arranged one on top of the other, the system can comprise two gate valves 17, 18, each installed in the wall of one column 14 and 24, respectively, for the gravitational discharge of ozonated water from the system.

Such a sequence of stages of the entire process of water ozonation with degassing prior to holding in the set of degassing and holding columns 14, 24 and the possibility of determining their duration allows high quality parameters and safety of ozone water to be obtained. This is particularly important in water having precursors of carcinogenic compounds, such as bromides, which with another method of carrying out the process than the one illustrated here, could lead to the formation of bromates harmful to health.

Furthermore, the presented system allowing subsequent stages of water treatment to be carried out in a planned manner in an appropriate time regime gives an opportunity to ozonate liquids for which this type of purification has not been used so far due to the content of various precursors of carcinogenic compounds. The presented solution can be used both for ozonation of underground and surface waters, for initial ozonation of source water, as well as for intermediate ozonation, i.e. after the processes of coagulation and first stage filtration on quartz sands in order to oxidise pollutants and compounds present in such water. This process can be carried out before the final water treatment processes which are realised, for example, in water treatment plants or in sewage purification plants at the final stage of its purification.

Intermediate ozonation by means of the system according to the invention can also be used for disinfecting purposes for liquids, including underground and surface waters. Pre-ozonization in surface waters is aimed at oxidation of iron and manganese compounds present in water, lowering the intensity of its colour, improving organoleptic properties (taste, smell). Thanks to that, chlorine doses used to maintain bacteriostaticity of water can be reduced. It can also be used for ozonation of sewage in the final technological stage for disinfection thereof or removal of pharmaceuticals from sewage.

The sets of oxidising and upflowing columns and degassing and holding columns, as well as the additional optionally used aerator are adapted to work as gravity devices, at atmospheric pressure. Depending on the target degree of water aeration, the aerator may have different dimensions of its respective sections.

Furthermore, the system developed for ozonation of water or sewage, as well as the aerator have a design that allows the system to be adapted to the season of the year, including a sudden change in the quality of source water subjected to ozonation or possibly source water subjected to aeration, related to weather: thaw, drought, or heavy rain. The developed design of the system for ozonation of water, as well as of the aerator, also ensures maintaining optimal working conditions at variable ambient temperature, which is important for the course of processes such as filtration, coagulation or ozonation of sewage.

The process of water aeration in the aerator 3 with ionised air coming from the ozonation process ensures: pre-aeration of source water, such as underground water, surface water, spring water, mineral water, for example coming from different intakes, and oxidation of some compounds contained in this water, and purified sewage. The aeration process carried out in the aerator, through pre-oxidation of source water, thus allows, among others, the use of lower doses of various chemical cleaning agents, on further stages of this water purification, removal of some compounds contained in water, which could contribute to the formation of byproducts of ozonation in the event that the water after the aeration process in the aerator is ozonated, for example by means of the ozonation system according to the invention. Water aeration in the aerator also ensures a reduction in the frequency of filter rinsing and an increase in the filtration speed - in the case where the water is subject to further purification.

Ionised air - constituting a by-product of water ozonation in the method according to the invention, used in the aerator for water aeration with the method as described above, improves the organoleptic properties of water after aeration, including taste and smell, and reduces the tendency of producing various carcinogenic compounds in the aerated water, including for example bromates. Furthermore, the developed design of the aerator contributes to the lack of need to use measuring devices, such as those used in conventional contact tanks, and the lack of continuous analytical control. The aerator retains the consistency of processes and their repeatability despite variable parameters of source water. Furthermore, the use of an aerator in a water treatment plant reduces the costs of the treatment process conducted.

On the other hand, aeration with ionised water with the method according to the invention improves the efficiency of the processes of coagulation and flocculation usually carried out after the processes of pre-oxidation of water.

An important advantage of the presented solution is also the possibility of degassing ozone water inside the column, in the set of degassing and holding columns, thanks to which the desorbed gas can be blown out to the destructor or other technological devices and does not pose any problem to the environment and servicing.

The basic features of such a solution is also co-current mixing of ozone with water outside the contact columns in the water mixing system 11 and in the pipeline 10, and further in the oxidising and upflowing column 12, 22, and design of the columns enabling convenient sampling of the residual ozone in the oxidising and upflowing column 12, 22 with the smallest amount of gas particles, which allows for more accurate measurement and control of processes. Furthermore, the design of the set of degassing and holding columns 14, 24 in the system makes that the upper part of this set, i.e. the column 24, may not be filled with water, which creates the space needed for the production of ionised air.

## Claims

1. A system for ozonation of liquids, comprising:
- a set of at least two oxidising and upflowing columns (12, 22), for ozonation of the liquids, arranged one on top of the other;
- a set of at least two degassing and holding columns (14, 24), for holding the liquids after the ozonation, arranged one on top of the other, the degassing and holding columns (14, 24) comprising:
∘ gate valves (17, 18) for gravitational discharging the liquids from the system after the holding, the gate valves (17, 18) being mounted at different heights of the set of degassing and holding columns (14, 24),
∘ a pump (16) arranged at the lower part of the lower degassing and holding column (14) for pumping out the liquids after the holding, and
∘ a fan (25) arranged in the upper part of the upper degassing and holding column (24), for delivering air from the environment to the interior of the degassing and holding columns (14, 24),
- a pipeline (26C) for providing a gas connection between the interiors of the upper columns (22, 24),
- an outlet (26), arranged at the upper part of the upper oxidising and upflowing column (22), for removing a gaseous mixture comprising the desorbed ozone from the interiors of the columns (12, 22, 14, 24),
**characterized in that**, the system for ozonation of liquids further comprises:
- flow passages (13, 23) located in the upper parts of the columns, connecting the oxidising and upflowing columns (12, 22) to the degassing and holding columns (14, 24) for overflow transport of the liquids from the oxidizing and upflowing columns (12, 22) to the degassing and holding columns (14, 24), wherein at least one of the flow passages (13) comprises adjustable gate valves (15) for blocking the overflow transport of the liquid, the flow passages (13, 23) being arranged at different heights between the set of oxidizing and upflowing columns (12, 22) and the set of degassing and holding columns (14, 24) so that one flow passage (13) is arranged in the central part of the sets of columns (12, 22, 14, 24) and the other flow passage (23) is located in the upper part of the sets of columns (12, 22, 14, 24);
- a system (11) for introducing and dispersing ozone comprising a mixing chamber (111) to which there are connected:
∘ a source liquid pipeline (9) for delivering the liquids to be ozonated to the mixing chamber (111), and
∘ a pre-ozonated liquid pipeline (10) for delivering a pre-ozonated liquid from a lower part of the lower degassing and holding column (14) to the mixing chamber (111) to be mixed with the liquids from the source liquid pipeline (9),
wherein the mixing chamber (111) further comprises an output connected to the lower part of the lower oxidizing and upflowing column (12) for introducing the liquids mixed in the mixing chamber (111) to the oxidizing and upflowing column (12),
and wherein the pre-ozonated liquid pipeline (10) comprises an ozone dosing system (7) having an ozone pipeline (6) for introducing ozone from the ozone pipeline (6) to the liquid from a lower part of the lower degassing and holding column (14) in the pre-ozonated liquid pipeline (10).

2. The system according to claim 1, **characterised in that** the ozone dosing system (7) is an injector.

3. The system of claim 1 or 2, further comprising a pump (8) installed between the inlet of the pre-ozonated liquid pipeline (10) from the lower part of the lower degassing and holding column (14) and the ozone dosing system (7) for supplying the liquid from the degassing and holding column (14) to the ozone dosing system (7) and the pre-ozonated liquid from the ozone dosing system (7) to the mixing chamber (111).

4. The system according to claim 3, **characterised in that** it further comprises an aerator-desorber (3) for aerating a liquid with the gaseous mixture removed by the outlet (26), wherein the aerator-desorber (3) is a column comprising:
- an inlet section (1) which has an automatic valve (33), for introducing the liquid inside the inlet section (1), the automatic valve (33) being installed outside the column,
- a diffuser (2) arranged inside the inlet section (1) for spraying the liquid in this section,
- an inlet (26A), arranged in the inlet section (1), for delivering the gaseous mixture from the outlet (26) to the stream of the liquid sprayed by the diffuser (2),
- a trickle bed (27) installed under the inlet section (1) for gravitational transport of the liquid from the inlet section (1) and for dissipating the gaseous mixture from the inlet section (1) therein;
- a trickle chamber (32) under the trickle bed (27) with an inlet (26B) of the gaseous mixture from the outlet (26) for collecting the liquid that passed through the trickle bed (27) and contacting this liquid with the gaseous mixture introduced via the inlet (26B), wherein the trickle chamber (32) further has an outlet provided with a pump (31) for removing the liquid outside the aerator-desorber (3).

5. The system according to claim 4, **characterised in that** the aerator-desorber (3) further comprises a system for gas purification after the process of aeration of the liquid in the aerator-desorber (3), installed above the inlet section (1) of the aerator-desorber (3), the system for gas purification comprising a separation bed (28), a scrubber (29), an ozone destructor (30) and a fan (25A) for removing gases from the gas purification system outside the aerator-desorber (3).

6. A method for ozonation of liquids, **characterised in that** the method is carried out in the system according to any of claims from 1 to 5, the method comprising the steps of:
- mixing source water from pipeline (9) with pre-ozonated water from pipeline (10) in the mixing chamber (111),
- introducing the liquids mixed with ozone to the lower part of the lower oxidising and upflowing column (12),
- subjecting the liquids to ozonation, in the set of at least two oxidising and upflowing columns, by successively transporting of the liquids with ozone upwardly up to the lowest open flow passage (13, 23) ,
- overflowing the liquids via the lowest open flow passage (13, 23) into the set of at least two degassing and holding columns (14, 24),
- delivering air from the environment to the interior of the degassing and holding columns (14, 24), above the liquids level,
- holding the liquids inside the set of at least two degassing and holding columns (14, 24) and, blowing air into the degassing and holding columns (14, 24) with the fan (25), and delivering the pre-ozonated liquid from a lower part of the lower degassing and holding column (14) into the mixing chamber (111), and
- discharging the liquids gravitationally with gate valves (17, 18) from the system, and / or pumping the liquids out of the system.

## Patentansprüche

1. System zur Ozonierung von Flüssigkeiten, umfassend:
- einen Satz von zumindest zwei Oxidations- und Aufwärtssäulen (12, 22) zur Ozonierung der Flüssigkeiten, die übereinander angeordnet sind;
- einen Satz von zumindest zwei Entgasungs- und Haltesäulen (14, 24) zum Halten der Flüssigkeiten nach der Ozonierung, die übereinander angeordnet sind, wobei die Entgasungs- und Haltesäulen (14, 24) Folgendes umfassen:
∘ Absperrventile (17, 18) zum Auslassen der Flüssigkeiten aus dem System nach dem Halten durch Schwerkraft, wobei die Absperrventile (17, 18) in unterschiedlichen Höhen des Satzes von Entgasungs- und Haltesäulen (14, 24) montiert sind,
∘ eine Pumpe (16), die an dem unteren Teil der unteren Entgasungs- und Haltesäule (14) angeordnet ist, um die Flüssigkeiten nach dem Halten herauszupumpen, und
∘ ein Gebläse (25), das in dem oberen Teil der oberen Entgasungs- und Haltesäule (24) angeordnet ist, um Luft aus der Umgebung in das Innere der Entgasungs- und Haltesäulen (14, 24) zu liefern,
- eine Rohrleitung (26C) zum Bereitstellen einer Gasverbindung zwischen den Inneren der oberen Säulen (22, 24),
- einen Auslass (26), der an dem oberen Teil der oberen Oxidations- und Aufwärtssäule (22) angeordnet ist, um ein Gasgemisch, welches das desorbierte Ozon umfasst, aus den Inneren der Säulen (12, 22, 14, 24) zu entfernen,
**dadurch gekennzeichnet, dass** das System zur Ozonierung von Flüssigkeiten ferner Folgendes umfasst:
- Strömungskanäle (13, 23), die sich in den oberen Teilen der Säulen befinden, welche die Oxidations- und Aufwärtssäulen (12, 22) mit den Entgasungs- und Haltesäulen (14, 24) für Überströmungstransport der Flüssigkeiten von den Oxidations- und Aufwärtssäulen (12, 22) zu den Entgasungs- und Haltesäulen (14, 24) verbinden, wobei zumindest einer der Strömungskanäle (13) verstellbare Absperrventile (15) zum Blockieren des Überströmungstransports der Flüssigkeit umfasst, wobei die Strömungskanäle (13, 23) in unterschiedlichen Höhen zwischen dem Satz von Oxidations- und Aufwärtssäulen (12, 22) und dem Satz von Entgasungs- und Haltesäulen (14, 24) angeordnet sind, sodass ein Strömungskanal (13) in dem mittleren Teil der Sätze von Säulen (12, 22, 14, 24) angeordnet ist und sich der andere Strömungskanal (23) in dem oberen Teil der Sätze von Säulen (12, 22, 14, 24) befindet;
- ein System (11) zum Einführen und Verteilen von Ozon, umfassend eine Mischkammer (111), mit der Folgendes verbunden ist:
∘ eine Quellenflüssigkeitsrohrleitung (9) zum Liefern der zu ozonisierenden Flüssigkeiten zu der Mischkammer (111), und
∘ eine vorozonisierte Flüssigkeitsrohrleitung (10) zum Liefern einer vorozonisierten Flüssigkeit von einem unteren Teil der unteren Entgasungs- und Haltesäule (14) zu der Mischkammer (111), um mit den Flüssigkeiten aus der Quellenflüssigkeitsrohrleitung (9) gemischt zu werden,
wobei die Mischkammer (111) ferner einen Ausgang umfasst, der mit dem unteren Teil der unteren Oxidations- und Aufwärtssäule (12) verbunden ist, um die Flüssigkeiten, die in der Mischkammer (111) gemischt werden, in die Oxidations- und Aufwärtssäule (12) einzuführen, und wobei die vorozonisierte Flüssigkeitsrohrleitung (10) ein Ozondosiersystem (7) umfasst, das eine Ozonrohrleitung (6) aufweist, um Ozon aus der Ozonrohrleitung (6) in die Flüssigkeit von einem unteren Teil der unteren Entgasungs- und Haltesäule (14) in der vorozonisierten Flüssigkeitsrohrleitung (10) einzuführen.

2. System nach Anspruch 1, **dadurch gekennzeichnet, dass** das Ozondosiersystem (7) ein Injektor ist.

3. System nach Anspruch 1 oder 2, ferner umfassend eine Pumpe (8), die zwischen dem Einlass der vorozonisierten Flüssigkeitsrohrleitung (10) von dem unteren Teil der unteren Entgasungs- und Haltesäule (14) und dem Ozondosiersystem (7) installiert ist, um die Flüssigkeit aus der Entgasungs- und Haltesäule (14) zu dem Ozondosiersystem (7) und die vorozonisierte Flüssigkeit aus dem Ozondosiersystem (7) zu der Mischkammer (111) zu liefern.

4. System nach Anspruch 3, **dadurch gekennzeichnet, dass** es ferner einen Belüfter-Desorber (3) zum Belüften einer Flüssigkeit mit dem durch den Auslass (26) entfernten Gasgemisch umfasst, wobei der Belüfter-Desorber (3) eine Säule ist, umfassend:
- einen Einlassabschnitt (1), der ein automatisches Ventil (33) zum Einführen der Flüssigkeit in den Einlassabschnitt (1) aufweist, wobei das automatische Ventil (33) außerhalb der Säule installiert ist,
- einen Diffusor (2), der innerhalb des Einlassabschnittes (1) angeordnet ist, um die Flüssigkeit in diesem Abschnitt zu versprühen,
- einen Einlass (26A), der in dem Einlassabschnitt (1) angeordnet ist, um das gasförmige Gemisch von dem Auslass (26) zu dem Strom der Flüssigkeit zu liefern, die durch den Diffusor (2) versprüht wird,
- ein Rieselbett (27), das unter dem Einlassabschnitt (1) für Schwerkrafttransport der Flüssigkeit aus dem Einlaufabschnitt (1) und zum Abführen des Gasgemisches aus dem Einlassabschnitt (1) darin installiert ist;
- eine Rieselkammer (32) unter dem Rieselbett (27) mit einem Einlass (26B) des gasförmigen Gemisches von dem Auslass (26) zum Sammeln der Flüssigkeit, die durch das Rieselbett (27) geflossen ist, und Kontaktieren dieser Flüssigkeit mit dem gasförmigen Gemisch, das über den Einlass (26B) eingeführt wird, wobei die Rieselkammer (32) ferner einen Auslass aufweist, der mit einer Pumpe (31) zum Entfernen der Flüssigkeit außerhalb des Belüfter-Desorbers (3) bereitgestellt ist.

5. System nach Anspruch 4, **dadurch gekennzeichnet, dass** der Belüfter-Desorber (3) ferner ein System zur Gasreinigung nach dem Prozess der Belüftung der Flüssigkeit in dem Belüfter-Desorber (3) umfasst, das über dem Einlassabschnitt (1) des Belüfter-Desorbers (3) installiert ist, wobei das System zur Gasreinigung ein Trennbett (28), einen Wäscher (29), einen Ozonzerstörer (30) und ein Gebläse (25A) zum Entfernen von Gasen aus dem Gasreinigungssystem außerhalb des Belüfter-Desorbers (3) umfasst.

6. Verfahren zur Ozonierung von Flüssigkeiten, **dadurch gekennzeichnet, dass** das Verfahren in dem System nach einem der Ansprüche 1 bis 5 durchgeführt wird, wobei das Verfahren die folgenden Schritte umfasst:
- Mischen von Quellenwasser aus Rohrleitung (9) mit vorozonisiertem Wasser aus Rohrleitung (10) in der Mischkammer (111),
- Einführen der mit Ozon vermischten Flüssigkeiten in den unteren Teil der unteren Oxidations- und Aufwärtssäule (12),
- Aussetzen der Flüssigkeiten gegenüber Ozonierung in dem Satz von zumindest zwei Oxidations- und Aufwärtssäulen durch sukzessives Transportieren der Flüssigkeiten mit Ozon aufwärts bis zu dem untersten offenen Strömungskanal (13, 23),
- Überströmen der Flüssigkeiten über den untersten offenen Strömungskanal (13, 23) in den Satz von zumindest zwei Entgasungs- und Haltesäulen (14, 24),
- Liefern von Luft aus der Umgebung in das Innere der Entgasungs- und Haltesäulen (14, 24), über dem Flüssigkeitsspiegel,
- Halten der Flüssigkeiten innerhalb des Satzes von zumindest zwei Entgasungs- und Haltesäulen (14, 24) und Blasen von Luft in die Entgasungs- und Haltesäulen (14, 24) mit dem Gebläse (25) und Liefern der vorozonisierten Flüssigkeit von einem unteren Teil der unteren Entgasungs- und Haltesäule (14) in die Mischkammer (111), und
- Auslassen der Flüssigkeiten durch Schwerkraft mit Absperrventilen (17, 18) aus dem System, und/oder Pumpen der Flüssigkeiten aus dem System.

## Revendications

1. Système destiné à l'ozonation de liquides, comprenant :
- un ensemble d'au moins deux colonnes oxydantes et ascendantes (12, 22), destinées à l'ozonation des liquides, agencées l'une sur l'autre ;
- un ensemble d'au moins deux colonnes de dégazage et de retenue (14, 24), destinées à retenir les liquides après l'ozonation, agencées l'une sur l'autre, les colonnes de dégazage et de retenue (14, 24) comprenant :
∘ des robinets-vannes (17, 18) destinés à la décharge gravitationnelle des liquides depuis le système après la retenue, les robinets-vannes (17, 18) étant montés à différentes hauteurs de l'ensemble de colonnes de dégazage et de retenue (14, 24),
∘ une pompe (16) agencée au niveau de la partie inférieure de la colonne de dégazage et de retenue inférieure (14) destinée à extraire les liquides à la pompe après la retenue ; et
∘ un ventilateur (25) agencé dans la partie supérieure de la colonne de dégazage et de retenue supérieure (24), destiné à délivrer de l'air de l'environnement vers l'intérieur des colonnes de dégazage et de retenue (14, 24),
- un pipeline (26C) destiné à fournir une connexion de gaz entre les intérieurs des colonnes supérieures (22, 24),
- une sortie (26), agencée au niveau de la partie supérieure de la colonne oxydante et ascendante supérieure (22), destinée à extraire un mélange gazeux comprenant l'ozone désorbé à partir des intérieurs des colonnes (12, 22, 14, 24),
**caractérisé en ce que**, le système destiné à l'ozonation de liquides comprend en outre :
- des passages d'écoulement (13, 23) situés dans les parties supérieures des colonnes, connectant les colonnes oxydantes et ascendantes (12, 22) aux colonnes de dégazage et de retenue (14, 24) destinés au transport par débordement des liquides des colonnes oxydantes et ascendantes (12, 22) aux colonnes de dégazage et de retenue (14, 24), dans lequel au moins l'un des passages d'écoulement (13) comprend des robinets-valves ajustables (15) destinés à bloquer le transport par débordement du liquide, les passages d'écoulement (13, 23) étant agencés à différentes hauteurs entre l'ensemble de colonnes oxydantes et ascendantes (12, 22) et l'ensemble de colonnes de dégazage et de retenue (14, 24) de sorte qu'un passage d'écoulement (13) est agencé dans la partie centrale des ensembles de colonnes (12, 22, 14, 24) et l'autre passage d'écoulement (23) est situé dans la partie supérieure des ensembles de colonnes (12, 22, 14, 24) ;
- un système (11) destiné à introduire et à disperser l'ozone comprenant une chambre de mélange (111) à laquelle sont connectés :
∘ un pipeline de liquide source (9) destiné à délivrer les liquides devant être ozonés vers la chambre de mélange (111), et
∘ un pipeline de liquide pré-ozoné (10) destiné à délivrer un liquide pré-ozoné d'une partie inférieure de la colonne de dégazage et de retenue inférieure (14) à la chambre de mélange (111) pour qu'il soit mélangé avec les liquides du pipeline de liquide source (9),
dans lequel la chambre de mélange (111) comprend en outre une sortie connectée à la partie inférieure de la colonne oxydante et ascendante inférieure (12) destinée à introduire les liquides mélangés dans la chambre de mélange (111) vers la colonne oxydante et ascendante (12),
et dans lequel le pipeline de liquide pré-ozoné (10) comprend un système de dosage d'ozone (7) ayant un pipeline d'ozone (6) destiné à introduire de l'ozone provenant du pipeline d'ozone (6) vers le liquide d'une partie inférieure de la colonne de dégazage et de retenue inférieure (14) dans le pipeline de liquide pré-ozoné (10).

2. Système selon la revendication 1, **caractérisé en ce que** le système de dosage d'ozone (7) est un injecteur.

3. Système selon la revendication 1 ou 2, comprenant en outre une pompe (8) installée entre l'entrée du pipeline de liquide pré-ozoné (10) de la partie inférieure de la colonne de dégazage et de retenue inférieure (14) et le système de dosage d'ozone (7) destinée à acheminer le liquide de la colonne de dégazage et de retenue (14) au système de dosage d'ozone (7) et le liquide pré-ozoné du système de dosage d'ozone (7) à la chambre de mélange (111).

4. Système selon la revendication 3, **caractérisé en ce qu'**il comprend en outre un aérateur-désorbeur (3) destiné à aérer un liquide avec le mélange gazeux extrait par la sortie (26), dans lequel l'aérateur-désorbeur (3) est une colonne comprenant :
- une section d'entrée (1) qui a une vanne automatique (33), destinée à introduire le liquide à l'intérieur de la section d'entrée (1), la vanne automatique (33) étant installée à l'extérieur de la colonne,
- un diffuseur (2) agencé à l'intérieur de la section d'entrée (1) destiné à pulvériser le liquide dans cette section,
- une entrée (26A), agencée dans la section d'entrée (1), destinée à délivrer le mélange gazeux de la sortie (26) vers le jet du liquide pulvérisé par le diffuseur (2),
- un lit de ruissellement (27) installé sous la section d'entrée (1) destiné au transport gravitationnel du liquide à partir de la section d'entrée (1) et destiné à dissiper le mélange gazeux à partir de la section d'entrée (1) dans celui-ci ;
- une chambre de ruissellement (32) sous le lit de ruissellement (27) avec une entrée (26B) du mélange gazeux provenant de la sortie (26) destinée à collecter le liquide qui est passé à travers le lit de ruissellement (27) et à amener ce liquide en contact avec le mélange gazeux introduit via l'entrée (26B), dans lequel la chambre de ruissellement (32) a en outre une sortie pourvue d'une pompe (31) destinée à extraire le liquide à l'extérieur de l'aérateur-désorbeur (3).

5. Système selon la revendication 4, **caractérisé en ce que** l'aérateur-désorbeur (3) comprend en outre un système destiné à la purification du gaz après le processus d'aération du liquide dans l'aérateur-désorbeur (3), installé au-dessus de la section d'entrée (1) de l'aérateur-désorbeur (3), le système destiné à la purification du gaz comprenant un lit de séparation (28), un épurateur (29), un destructeur d'ozone (30) et un ventilateur (25A) destiné à extraire des gaz du système de purification du gaz à l'extérieur de l'aérateur-désorbeur (3).

6. Procédé destiné à l'ozonation de liquides, **caractérisé en ce que** le procédé est réalisé dans le système selon l'une quelconque des revendications 1 à 5, le procédé comprenant les étapes suivantes :
- mélange de l'eau de source provenant du pipeline (9) avec de l'eau pré-ozonée provenant du pipeline (10) dans la chambre de mélange (111),
- introduction des liquides mélangés avec de l'ozone dans la partie inférieure de la colonne oxydante et ascendante inférieure (12),
- fait de soumettre les liquides à une ozonation, dans l'ensemble d'au moins deux colonnes oxydantes et ascendantes, par le transport successif des liquides avec de l'ozone vers le haut jusqu'au passage d'écoulement ouvert le plus bas (13, 23),
- fait de faire déborder les liquides via le passage d'écoulement ouvert le plus bas (13, 23) jusque dans l'ensemble d'au moins deux colonnes de dégazage et de retenue (14, 24),
- délivrance d'air de l'environnement vers l'intérieur des colonnes de dégazage et de retenue (14, 24), au-dessus du niveau des liquides,
- retenue des liquides à l'intérieur de l'ensemble d'au moins deux colonnes de dégazage et de retenue (14, 24) et, soufflage d'air jusque dans les colonnes de dégazage et de retenue (14, 24) avec le ventilateur (25), et délivrance du liquide pré-ozoné à partir d'une partie inférieure de la colonne de dégazage et de retenue inférieure (14) jusque dans la chambre de mélange (111), et
- décharge gravitationnelle des liquides avec des robinets-vannes (17, 18) depuis le système, et/ou pompage du liquide hors du système.
